# EUROPÄISCHE PATENTSCHRIFT

(11) **EP 2 574 574 B1**
(45) Veröffentlichungstag und Bekanntmachung des Hinweises auf die Patenterteilung: **29.01.2014**
(21) Anmeldenummer: 11183529.4
(22) Anmeldetag: 30.09.2011
(51) Int. Cl.: B65G 1/137

(54) **Apothekenkommissioniervorrichtung mit universellem Versorgungs- und Steuermodul**
Pharmacy picking device with universal supply and control module
Dispositif de commissionnement de pharmacie doté d'un module d'alimentation et de commande universel

(43) Veröffentlichungstag der Anmeldung: 03.04.2013
(73) Patentinhaber: CareFusion Germany 326 GmbH, 53539 Kelberg (DE)
(72) Erfinder: Hellenbrand Christoph, 56761 Kaifenheim (DE)
(74) Vertreter: Zenz

(56) Entgegenhaltungen:
- EP-A1- 1 524 209
- EP-A1- 1 852 351
- DE-A1-102008 027 646

## Beschreibung

Die vorliegende Erfindung betrifft eine Apothekenkommissioniervorrichtung und insbesondere eine Apothekenkommissioniervorrichtung mit einem universellen Versorgungs- und Steuermodul.

Die Installation bzw. der Aufbau moderner Apothekenkommissioniervorrichtungen beansprucht in der Regel drei Arbeitstage. _{[Chh1]}Sobald die Kommissioniervorrichtung vollständig aufgebaut erfolgt die Inbetriebnahme, das Einmessen der Lagerorte und die Befüllung. Hierzu werden zwei weitere Tage benötigt, wobei sich eine Zeitspanne für die Bestückung der Vorrichtung verlängern kann, falls eine große Kommissioniervorrichtung in einer Apotheke verbaut ist. Der übliche Betrieb der Apotheke ist also zumindest für fünf Tage gestört.

Die EP 1 524 209 A1 beschreibt ein automatisiertes Regallager mit wenigstem einem mehrere übereinander angeordnete, sich in einer Längsrichtung erstreckende Regalböden aufweisenden Regal und wenigstens einem eine Greifvorrichtung Regalbediengerät, einer Aufgabestation, einer Identifizierungseinrichtung sowie einem Förderband, wobei sämtliche der vorgenannten Bauteile als separate Einrichtungen in dem Lager verteilt sind.

Die EP 1 852 351 A1 beschreibt eine Tablettenabfüllvorrichtung mit einer Steuereinrichtung, einer lösbaren Tablettenzuführvorrichtung, einer Tablettenspeichereinrichtung, einer Etikettiereinrichtung, einer Schließeinrichtung sowie einer Entnahmeeinrichtung, wobei sämtliche der vorgenannten Einrichtungen über die Steuereinrichtung gesteuert werden.

Die DE 10 2008 027 646 A1 beschreibt ein System zur automatischen Steuerung der Einlagerung und/oder Kommissionierung in automatisierten Kleinteilelagern, vorzugsweise Tablarlagern. Ein Nachteil vorgenannten Vorrichtungen ist es, dass der Aufbau und die Bestückung dieser großen und konstruktiv aufwendigen Vorrichtungen sehr langwierig ist. Werden diese beispielsweise in Apotheken installiert, ist es notwendig, dass die Apotheke für die Installation zeitweise geschlossen wird.

Es ist die Aufgabe der vorliegenden Erfindung eine Apothekenkommissioniervorrichtung bereitzustellen, die in einer kürzeren Zeitspanne und dadurch deutlich kostengünstiger als heute übliche Kommissioniervorrichtungen in einer Apotheke aufgebaut und bestückt werden kann.

Diese Aufgabe wird erfindungsgemäß durch eine Apothekenkommissioniervorrichtung mit den Merkmalen des Patentanspruchs 1 gelöst.

Die erfindungsgemäße Apothekenkommissioniervorrichtung umfasst zwei wesentliche Bestandteile, nämlich ein Gehäuse und ein universelles Versorgungs- und Steuermodul, wobei das Versorgungs- und Steuermodul gemäß der vorliegenden Erfindung mit zahlreichen Gehäusevarianten verwendet werden kann. Das Gehäuse selber umfasst eine Mehrzahl von übereinander angeordneten Regalböden und zumindest ein horizontal und vertikal vor den Regalböden auf einer Führung verfahrbares Bediengerät mit einer Greifvorrichtung zum Ein- und/oder Auslagern von Arzneimittelpackungen auf bzw. von den Regalböden, wobei das Bediengerät auf in einem Arbeitsbereich befindliche Arzneipackungen zugreifen kann. Das Gehäuse umfasst ferner eine Fördervorrichtung zum Transportieren einzulagernder Arzneimittelpackungen, wobei sich diese Fördervorrichtung zumindest teilweise in den Arbeitsbereich des Bediengerätes erstreckt, so dass dieses Arzneimittelpackungen von der Fördervorrichtung aufnehmen kann und auf einem vorbestimmten Regalboden befördern kann. Die Fördervorrichtung grenzt bei einer vorgegebenen Position an eine Gehäuse-Ankoppelschnittstelle, die an einer Außenwand oder innerhalb einer Ausnehmung des Gehäuses angeordnet ist, wobei natürlich auch solche Fördervorrichtung an die Gehäuse-Ankoppelschnittstelle angrenzen, die sich durch die Gehäuse-Ankoppelschnittstelle nach außen erstrecken.

Die erfindungsgemäße Apothekenkommissionierungsvorrichtung umfasst ferner ein universelles Versorgungs- und Steuermodul mit einer Anzahl von Baugruppen, nämlich einer Aufgabevorrichtung für einzulagernde Arzneimittelpackungen, einer Identifizierungs- und Messvorrichtung zum Identifizieren und Vermessen einzulagernder Arzneimittelpackungen, Bediener-Eingabe/AusgabeEinrichtungen zur Eingabe und Wiedergabe von Daten und Anweisungen durch bzw. an einen Bediener, einer Steuerelektronik, die die in dem Versorgungs- und Steuermodul angeordneten Baugruppen steuert, einer Spannungsversorgungsbaugruppe für sämtliche elektrische Baugruppen des Versorgungs- und Steuermoduls, einer zu der Gehäuse-Ankoppelschnittstelle komplementären mechanischen Modul-Ankopplungsschnittstelle und wenigstens einer elektrischen Schnittstelle zum Ankoppeln sämtlicher innerhalb des Gehäuses angeordneter elektrischer Baugruppen, wobei dieses Ankoppeln derart durchgeführt ist, dass die Spannungsversorgung der in dem Gehäuse angeordneten elektrischen Baugruppen von der Spannungsversorgungsbaugruppe des Versorgungs- und Steuermoduls bereitgestellt wird.

Die oben genannten Baugruppen können separat in dem Versorgungs- und Steuermodul verbaut sein, es ist aber auch denkbar, dass mehrere Baugruppen bzw. Vorrichtungen miteinander kombiniert sind, wobei jedoch sichergestellt ist, dass die jeweiligen Funktionen der einzelnen Baugruppen/Vorrichtungen realisiert werden können. So ist es beispielsweise denkbar, dass die Identifizierungs- und Messvorrichtung mit der Aufgabevorrichtung in einer Sammelbaugruppe vereint sind, wobei diese dann die Funktionen der einzelnen Baugruppen zur Verfügung stellt.

Ferner ist es auch denkbar, dass Teile von Baugruppen des Gehäuses in Baugruppen des Versorgungs- und Steuermoduls integriert sind (ein Beispiel dafür folgt weiter unten). Wenn im Rahmen dieser Anmeldung also von Baugruppen oder Vorrichtungen gesprochen wird, so soll dies nicht implizieren, dass diese alle separat ausgeführt sind.

Die wenigstens eine elektrische Schnittstelle umfasst eine Schnittstelle für das Bediengerät, mit der die Steuerelektronik derart gekoppelt ist, dass die Steuerelektronik Steuersignale an das Bediengerät übermitteln kann.

Das Versorgungs- und Steuermodul ist derart benachbart zu dem Gehäuse angeordnet, dass über die Gehäuse-Ankoppelschnittstelle und die Modul-Ankoppelschnittstelle eine mechanische Kopplung zwischen dem Gehäuse und den Versorgungs- und Steuermodul hergestellt ist, so dass einzulagernde Arzneimittelpackungen in oder am Versorgungs- und Steuermodul an einer der Steuerelektronik bekannten Position auf die Fördervorrichtung übergeben werden.

Bei der erfindungsgemäßen Apothekenkommissioniervorrichtung ist ein Großteil der elektrischen Baugruppen in dem Versorgungs- und Steuermodul angeordnet und diese für den ordnungsgemäßen Betrieb der Kommissioniervorrichtung wesentlichen Baugruppen können bereits im Werk verbunden und miteinander synchronisiert und kalibriert werden. Es ist nicht länger notwendig, vor Ort bei der Installation der Kommissioniervorrichtung die verschiedenen elektrischen Baugruppen miteinander zu verbinden und zu kalibrieren.

Bei dem Aufbau bzw. der Installation einer erfindungsgemäßen Kommissioniervorrichtung wird zunächst das Gehäuse, das den eigentlichen Lagerort für die Arzneimittelpackungen über die mehreren Regalböden bereitstellt, aufgebaut. Das Gehäuse und die zugehörigen Regalböden selber lassen sich sehr rasch aufbauen, da es sich um eine recht einfache Konstruktion handelt. Lediglich das auf einer Führung verfahrbare Bediengerät benötigt eine Verbindung mit der zentralen Steuerelektronik der Kommissioniervorrichtung.

Sobald das Gehäuse errichtet ist, wird bei der Gehäuse-Ankoppelschnittstelle das Versorgungs- und Steuermodul angeordnet und über die Modul-Ankoppelschnittstelle eine mechanische Kopplung zwischen dem Gehäuse und dem Versorgungs- und Steuermodul hergestellt. Ferner wird über die wenigstens eine elektrische Schnittstelle eine elektrische Überwindung zwischen dem Bediengerät und der Steuerelektronik hergestellt (also ebenfalls zwischen dem Gehäuse und der Versorgungs- und Steuermodul), so dass die Steuerelektronik Steuersignale an das Bediengerät übermitteln kann. Bei der erfindungsgemäßen Kommissioniervorrichtung ist also lediglich eine mechanische und eine elektrische Verbindung herzustellen; sämtliche anderen fehleranfälligen elektrischen Verbindungen wurden bereits vor Beginn des Aufbaus der Kommissioniervorrichtung, nämlich bei der Fertigung des Versorgungs- und Steuermoduls, hergestellt. Die Aufbauzeit wird dadurch wesentlich vermindert, da die Arbeiten zur elektrischen Verbindung und Koppelung verschiedener Baugruppen nicht mehr vor Ort durchzuführen ist, sondern bereits bei dem Hersteller bei der Fertigung des Versorgungs- und Steuermodels.

Das universelle Versorgungs- und Steuermodul ist mit seiner Modul-Ankoppelschnittstelle bei der Gehäuse-Ankoppelschnittstelle anzuordnen. Die Ankoppelschnittstelle des Gehäuses kann bei einer beliebigen Außenwand angeordnet sein; die genaue Anordnung der Ankoppelschnittstelle in dem Gehäuse selber ist primär durch die räumlichen Gegebenheiten in einer Apotheke bestimmt. Sofern die vorgenannten räumlichen Gegebenheiten dies zulassen, ist es bevorzugt, dass das Gehäuse eine Ausnehmung aufweist (beispielsweise bei einer Ecke, wenn das Gehäuse selbst rechteckig ausgeführt ist), in welcher das universelle Versorgungs- und Steuermodul angeordnet ist. Bei dieser Art der Anordnung des Versorgungs- und Steuermoduls in einer Ausnehmung des Gehäuses ist es ferner bevorzugt, dass die Vorderseite des universellen Versorgungs- und Steuermoduls mit der Vorderfront des Gehäuses abschließt.

Die Lagerung der Arzneimittelpackungen erfolgt auf einer Mehrzahl von übereinander angeordneten Regalböden, vor denen ein Bediengerät mit einer Greifvorrichtung horizontal und vertikal verfahrbar ist. Zur Erhöhung der Aufnahmekapazität der Kommissioniervorrichtung ist es bevorzugt, dass die Mehrzahl von übereinander angeordneten Regalböden zwei Regalreihen bilden, zwischen denen eine Gasse definiert ist, in welcher die Führung des Bediengeräts derart angeordnet ist, dass das Bediengerät mit der Greifvorrichtung auf die Regalböden beider Regalreihen zugreifen kann. In einem solchen Fall kann beispielsweise die Greifvorrichtung als solche um die vertikale Achse drehbar sein oder verfahrbare Greifbacken aufweisen, welche in die Regalböden zu beiden Seiten der Gasse verfahren werden können.

Aufgrund der hohen Lagerkapazität kann es insbesondere bei einer derartigen Ausgestaltung der Kommissioniervorrichtung sinnvoll sein, eine Mehrzahl von Bediengeräten zu verwenden. Die Verwendung des Begriffs "Regalreihen" soll nicht implizieren, dass diese parallel zueinander verlaufen müssen. Sollten es die räumlichen Gegebenheiten erfordern, können die "Reihen" auch gekrümmt sein; in einem solchen Falle ist die Führung des oder der Bediengeräte entsprechend anzupassen.

Das Bediengerät ist zum einen entlang der Führung verfahrbar (x-Richtung). Ferner ist zumindest die Greifvorrichtung des Bediengerätes in der Höhe verfahrbar (y-Richtung). Der Antrieb für die Bewegung der Greifvorrichtung in y-Richtung ist bei dem Bediengerät selber angeordnet. Die Antriebseinheit für die Bewegung des Bediengerätes entlang der Führung kann zum einen bei dem Bediengerät selbst angeordnet sein. In diesem Falle verfährt das Bediengerät zusammen mit der Antriebseinheit an einer ortsfesten Führung. Zur Verminderung der zwischen dem Bediengerät und der Steuerelektronik der Kommissioniervorrichtung notwendigen Verkabelung ist es jedoch bevorzugt, dass die Antriebseinheit für die Bewegung des Bediengerätes in dem universellen Versorgungs- und Steuermodul angeordnet ist. Diese Antriebseinheit ist dann mit dem Bediengerät gekoppelt, beispielsweise über einen Riementrieb, und bewegt das Bediengerät in x-Richtung entlang der Führung. Eine solche Anordnung hat ferner den Vorteil, dass bei einer Fehlfunktion der Antriebseinheit für die Bewegung in x-Richtung die Antriebseinheit selber einfacher zu erreichen und ggf. auszutauschen ist. Ferner ist von Vorteil, dass die durch die Antriebseinheit produzierte Wärme nicht unmittelbar in den Lagerraum der Arzneimittelpackungen abgeführt wird. Zur Vermeidung einer aufwendigen Verkoppelung zwischen Antriebseinheit und Bediengerät ist es bevorzugt, dass zumindest ein Teil der Antriebseinheit nach der Installation der Versorgungs- und Steuermoduls über eine Öffnung in dem Gehäuses in dieses eingeführt wird, so dass beispielsweise ein Triebriemen leicht angekoppelt werden kann.

Die Aufgabevorrichtung des Versorgungs- und Steuermoduls dient zum Einlagern der Arzneimittelpackungen, wobei die Aufgabevorrichtung der Ort der Kommissioniervorrichtung ist, bei welcher der Bediener die Arzneimittelpackungen der Vorrichtung selber zuführt.

Von einem Bediener wird eine einzelne Packung oder eine Mehrzahl von Arzneimittelpackungen in oder auf die Aufgabevorrichtung gegeben.

Besonders bevorzugt ist es, dass ein Abschnitt der Fördervorrichtung des Gehäuses bei der Gehäuse-Ankoppelschnittstelle aus dem Gehäuse geführt ist und über die Modul-Ankoppelschnittstelle in das universelle Versorgungs- und Steuermodul hineinragt und dabei eine mechanische Kopplung zwischen dem Gehäuse und dem Versorgungs- und Steuermodul hergestellt ist. In einem solchen Falle werden die Arzneimittelpackungen in dem Versorgungs- und Steuermodul an einer der Steuerelektronik bekannten Position auf die Fördervorrichtung übergeben. Dies hat den Vorteil, dass lediglich eine Fördervorrichtung bei der Kommissioniervorrichtung vorgesehen ist und somit der bauliche Mehraufwand für eine zweite Fördereinrichtung in dem Versorgungs- und Steuermodul entfällt. In diesem Fall stellt ein Abschnitt der Fördervorrichtung einen Teil der Aufgabevorrichtung bereit (siehe oben).

Jedoch kann es aus beispielsweise baulichen Gründen notwendig werden, dass auch in dem Versorgungs- und Steuermodul eine Fördervorrichtung vorgesehen ist, die dann Teil der Aufgabevorrichtung ist. Die Packungen werden dann von dem Bediener auf die Fördervorrichtung des Versorgungs- und Steuermoduls aufgelegt und werden im Bereich des Übergangs Gehäuse-Ankoppelschnittstelle / Modul-Ankoppelschnittstelle von der Fördervorrichtung im Modul an die Fördervorrichtung des Gehäuses übergeben.

Die Aufgabevorrichtung kann auch ein Schubladensystem umfassen, in welchem von einem Benutzer Arzneimittelpackungen gegeben werden. Dieses Schubladensystem kann so ausgeführt sein, dass es bei dem Übergang Gehäuse-Ankoppelschnittstelle / Modul-Ankoppelschnittstelle in das Gehäuse und in diesem in das Arbeitsgebiet des Bediengeräts geführt wird. Zwar hat dies Nachteile im Bezug auf die Bedienbarkeit der Kommissioniervorrichtung, die Kosten sind jedoch entsprechend geringer, da die Arzneimittelpackungen quasi per Hand in das Gehäuse eingebracht werden (wo sie dann von dem Bediengerät aufgenommen werden). In diesem Fall wird die Fördervorrichtung durch ein Bauteil der Aufgabevorrichtung bereitgestellt.

Bei einem bevorzugten Ausführungsbeispiel umfasst die Fördervorrichtung ein Endlosförderband, auf welches die Arzneimittelpackungen übergeben werden. Ein solches Endlosförderband ist kostengünstig und kann im Schadensfall rasch ersetzt werden. Dieses Endlosband kann sich bis in das Versorgungs- und Steuermodel erstrecken (siehe oben).

Aufgrund der Konzentration der elektrischen Baugruppen in dem Versorgungs- und Steuermodul ist die Wärmeentwicklung auf einen kleinen Raum begrenzt. Zur Vermeidung einer zu hohen Temperatur in dem Versorgungs- und Steuermodul umfasst das universelle Versorgungs- und Steuermodul vorzugsweise eine Belüftungsvorrichtung mit einer Luftansaugeinrichtung, Luftführungen und Luftaustritten. Die Luftführungen sind vorzugsweise derart ausgebildet, dass keine Luft in das Gehäuse eintritt, um so eine Erwärmung des Lagerbereiches für die Arzneimittelpackungen zu vermeiden. Sinnvollerweise ist die Luftansaugeinrichtung im Bodenbereich und die Luftaustritte im oberen Bereich des Versorgungs- und Steuermoduls angeordnet.

Im Nachfolgenden wird die vorliegende Erfindung unter Bezugnahme auf die Zeichnung beschrieben, in welcher
Figuren 1A und 1B schematische Draufsichten eines ersten und eines zweiten Ausführungsbeispiels der erfindungsgemäßen Kommissioniervorrichtung zeigen,
Figur 2 eine schematische Seitenansicht eines weiteren Ausführungsbeispiels der erfindungsgemäßen Kommissioniervorrichtung zeigt, und
Figur 3 eine detaillierte Schrägansicht eines Versorgungs- und Steuermoduls eines weiteren Ausführungsbeispiels der erfindungsgemäßen Kommissioniervorrichtung zeigt.

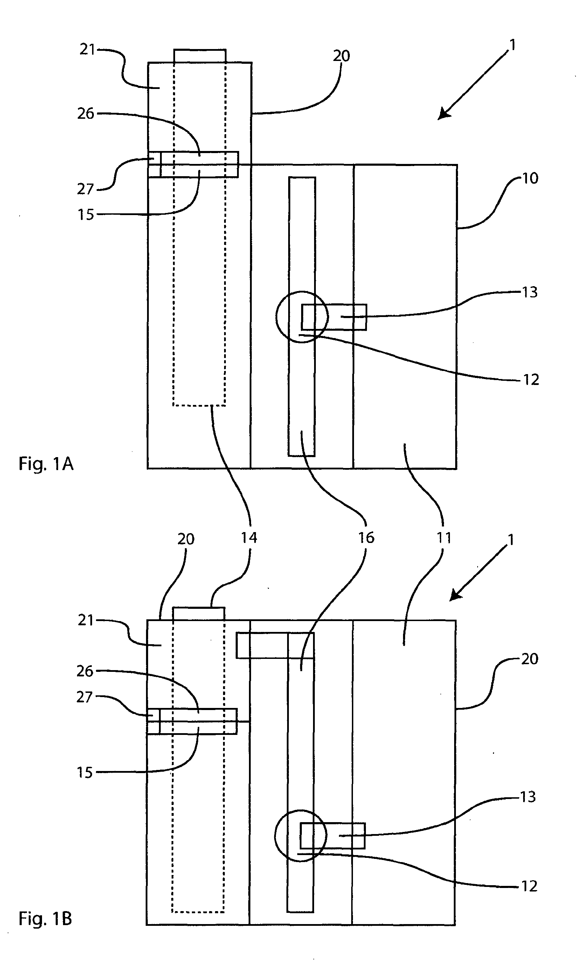

Figur 1a zeigt eine schematische Draufsicht eines ersten Ausführungsbeispiels der erfindungsgemäßen Kommissioniervorrichtung 1 mit einem Gehäuse 10 und einem Versorgungs- und Steuermodul 20. Das Gehäuse 10 umfasst bei einer Außenwand eine Gehäuse-Ankoppelschnittstelle 15, und das Versorgungs- und Steuermodel 20 umfasst bei einer Außenseite ebenfalls eine Ankoppelschnittstelle 26. Das Versorgungs- und Steuermodul 20 ist bei der Gehäuse-Ankoppelschnittstelle 15 des Gehäuses 10 an der Außenwand des Gehäuses 10 angeordnet, und zwar derart, dass die Modul-Ankoppelschnittstelle 26 der Gehäuse-Ankoppelschnittstelle 15 gegenüberliegt und so eine mechanische Kopplung zwischen dem Gehäuse 10 und dem Versorgungs- und Steuermodul 20 bereitgestellt ist.

Das Gehäuse 10 umfasst eine Fördervorrichtung 14, die bei der Gehäuse-Ankoppelschnittstelle 15 aus dieser durch die Modul-Ankoppelschnittstelle 26 in das Versorgungs- und Steuermodul 20 eingeführt ist, und der durch das Versorgungs- und Steuermodul 20 geführte Abschnitt der Fördervorrichtung 14 ist Teil der bei dieser Ansicht nicht näher gezeigten Aufgabevorrichtung 21. In dem Gehäuse 10 ist eine Mehrzahl von Regalböden 11 angeordnet, die zwei parallele Regalreihen bilden. Zwischen den Regalreihen ist eine Gasse definiert, und in dieser Gasse ist eine Führung 16 für das Bediengerät 12 und dessen Greifvorrichtung 13 angeordnet. Zwischen dem Gehäuse 10 und dem Versorgungs- und Steuermodul 20 ist ferner über die Schnittstelle 27 eine elektrische Verbindung bereitgestellt.

Figur 1B zeigt eine schematische Draufsicht eines zweiten Ausführungsbeispiels der erfindungsgemäßen Kommissioniervorrichtung 1. Auch bei diesem Ausführungsbeispiel umfasst die Kommissioniervorrichtung 1 ein Gehäuse 10. Im Gegensatz zu dem in Figur 1A gezeigten ersten Ausführungsbeispiels umfasst das Gehäuse 10 eine Ausnehmung, in welcher das Versorgungs- und Steuermodul 20 angeordnet ist. Auch bei diesem zweiten Ausführungsbeispiel umfasst das Gehäuse 10 eine Fördereinrichtung 14, wobei ein Abschnitt dieser Fördereinrichtung 14 über die Gehäuse-Ankoppelschnittstelle 15 und die Modul-Ankoppelschnittstelle 26 in und durch das Versorgungs- und Steuermodul 20 geführt ist. Benachbart zu den Ankoppelschnittstellen 15, 26 ist ferner eine elektrische Schnittstelle 27 angeordnet. Das Gehäuse 10 umfasst auch bei diesem Ausführungsbeispiel eine Anzahl von Regalböden 11, die bei dem gezeigten Ausführungsbeispiel zwei Regalreihen bilden, die zwischen sich eine Gasse definieren, in welcher eine Führung 16 für ein Bediengerät 12 mit einer Greifvorrichtung 13 angeordnet ist. Bei dem in Figur 1B gezeigten Ausführungsbeispiel ist die Antriebseinheit für die Bewegung des Bediengeräts entlang der Führung 16 (x-Richtung) innerhalb des Versorgungs- und Steuermoduls 20 angeordnet und derart mit dem Bediengerät 12 gekoppelt, dass dieses entlang der x-Richtung verfahren werden kann. Eine entsprechende Kopplung kann beispielsweise mit einem Riementrieb erfolgen, wobei in einem solchen Fall entsprechende Umlenkrollen in dem Gehäuse bzw. bei der Führung 16 vorzusehen sind.

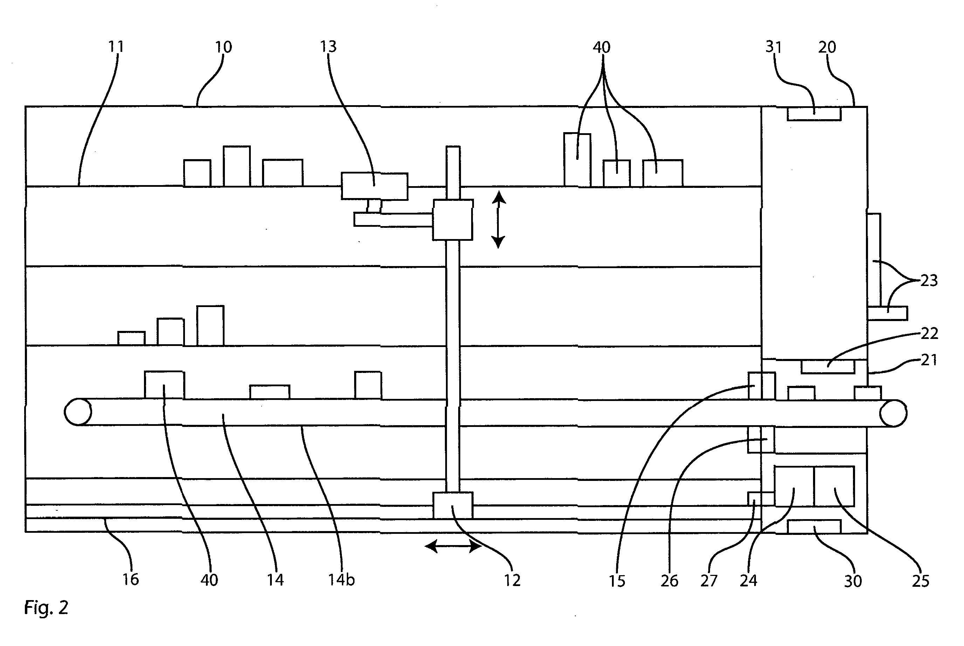

Die Figur 2 zeigt eine schematische Seitenansicht eines weiteren Ausführungsbeispiels der erfindungsgemäßen Kommissionierungsvorrichtung 1. Diese umfasst ein Gehäuse 10 und ein Versorgungs- und Steuermodul 20. In dem Gehäuse 10 sind eine Mehrzahl von übereinander angeordneten Regalböden 11 angeordnet, auf welchen eine Mehrzahl von Arzneimittelpackungen 40 angeordnet ist bzw. werden kann. An einer Führung 16 ist ein Bediengerät 12 in x-Richtung verfahrbar. Dieses Bediengerät 12 umfasst eine Greifvorrichtung 13, die in y-Richtung verfahrbar ist. Die Antriebseinheit für die Bewegung des Bediengeräts 12 in x-Richtung kann bei beispielsweise dem Fuß des Bediengeräts 12 angeordnet, oder aber in dem Versorgungs- und Steuermodul 20; die exakte Anordnung der Antriebseinheit hängt von der räumlichen Ausgestaltung der Kommissionierungsvorrichtung ab (siehe Beschreibung der Figuren 1a und 1b). In dem Gehäuse 10 ist ferner eine Fördervorrichtung 14 mit einem Endlosförderband 14a angeordnet, wobei sich bei dem gezeigten Ausführungsbeispiel ein Abschnitt der Fördervorrichtung 14 durch die Gehäuse-Ankoppelschnittstelle 15 und die Modul-Ankoppelschnittstelle 26 in und durch die Aufgabevorrichtung 21 des Steuerungs- und Versorgungsmoduls 20 erstreckt. Bei dem gezeigten Ausführungsbeispiel ist der aus dem Gehäuse 10 austretende Teil der Fördervorrichtung 14 ein Teil der Aufgabevorrichtung 21, so dass eine Übergabe der Arzneimittelpackungen von einer separaten Fördervorrichtung in dem Versorgungs- und Steuermodul 20 auf eine Fördervorrichtung des Gehäuses unterbleiben kann.

Die Modul-Ankoppelschnittstelle 26 des Versorgungs- und Steuermoduls 20 ist an einer dem Gehäuse zugewandten Außenseite bzw. Außenwand des Versorgungs- und Steuermoduls angeordnet, wobei das Modul selbst derart in Bezug auf das Gehäuse 10 angeordnet ist, dass über die Gehäuse-Ankoppelschnittstelle 15 und die Modul-Ankoppelschnittstelle 26 eine mechanische Koppelung zwischen dem Gehäuse 10 und dem Versorgungs- und Steuermodul 20 bereitgestellt ist. Eine mechanische Koppelung wird ferner über die Ein- und Durchführung des Abschnitts der Fördervorrichtung 14 in die Aufgabevorrichtung 21 erzielt.

Zwischen dem Gehäuse 10 und dem Versorgungs- und Steuermodul 20 existiert ferner eine elektrische Verbindung bei der elektrischen Schnittstelle 27. Über diese Schnittstelle erfolgt zum eine die Spannungsversorgung sämtlicher elektrischen Baugruppen innerhalb des Gehäuses und zum anderen werden über eine spezielle Schnittstelle bzw. einen Schnittstellenabschnitt Steuersignale von der Steuerelektronik 24 an das Bediengerät 12 übermittelt. Wie der Figur 2 zu entnehmen ist, gibt es nur zwei Schnittstellen zwischen dem Gehäuse 10 und dem Versorgungs- und Steuermodul 20, nämlich eine mechanische und eine elektrische; die Arbeiten bei der Installation bzw. dem Aufbau der Kommissionierungsvorrichtung sind hinsichtlich der Koppelung elektrischer Baugruppen somit auf eine Schnittstelle beschränkt, so dass die Aufbauzeit deutlich verkürzt ist.

In dem Versorgungs- und Steuermodul 20 ist bei dem gezeigten Ausführungsbeispiel eine Identifizierungs- und Messvorrichtung 22 innerhalb der Aufgabevorrichtung 21 angeordnet. Bei anderen Ausführungsbeispielen kann die Identifizierungs- und Messvorrichtung auch außerhalb der Aufgabevorrichtung 21 angeordnet sein. Das universelle Versorgungs- und Steuermodul 20 umfasst ferner Bediener-Eingabe/Ausgabe-Einrichtungen 23 (einen Bildschirm mit einem Touchscreen) zur Eingabe und Wiedergabe von Daten und Anweisungen durch bzw. an den Bediener. Im unteren Abschnitt des Versorgungs- und Steuermoduls 20 sind die Steuerelektronik 24 und benachbart dazu die Spannungsversorgungsbaugruppe 25 angeordnet. Diese beiden Baugruppen erzeugen einen Großteil der in dem Versorgungs- und Steuermodul 20 entstehenden Wärme, so dass bei dem gezeigten Ausführungsbeispiel unter diesen Baugruppen eine Luftansaugeinrichtung 30 angeordnet ist, über welche kühle Außenluft dem Versorgungs- und Steuermodul 20 zugeführt wird. Über nicht gezeigte Luftführungen wird die angesaugte Luft durch das Modul geführt und tritt im oberen Bereich bei Luftaustritten 31 aus dem Versorgungs- und Steuermodul 20 aus. Die Luftführungen sind dabei vorzugsweise derart ausgebildet, dass keine Luft in das Gehäuse 10 eintritt, um auf diese Weise den Wärme- und Schmutzeintrag in das Gehäuse zu minimieren.

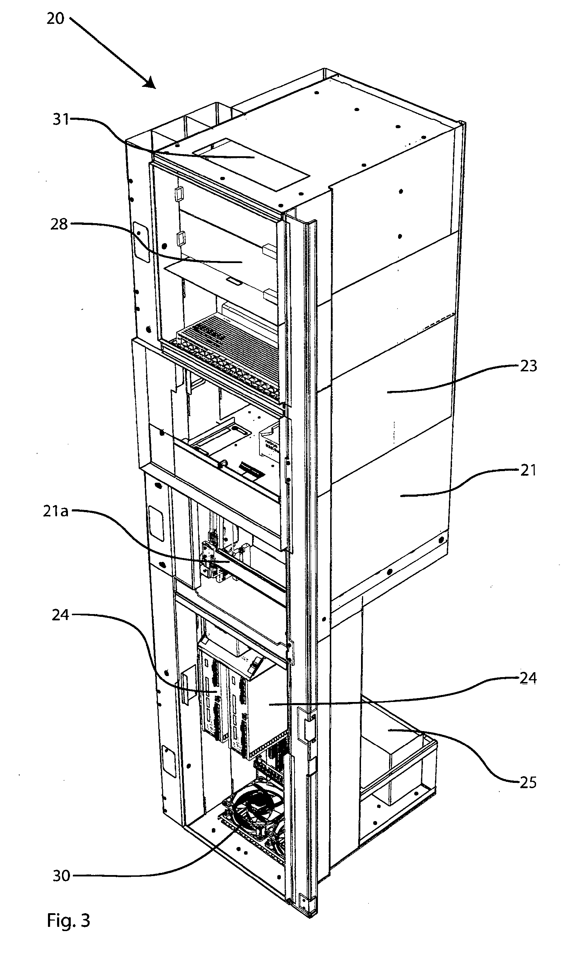

Figur 3 zeigt eine detaillierte Schrägansicht eines Versorgungs- und Steuermoduls 20 eines weiteren Ausführungsbeispiels der erfindungsgemäßen Kommissioniervorrichtung. Das Versorgungs- und Steuermodul 20 umfasst im unteren Bereich eine Luftansaugeinrichtung 30 einer Belüftungsvorrichtung. Im unteren Bereich sind ferner die Spannungsversorgungsbaugruppe 25 sowie die Steuerelektronik 24 angeordnet. Oberhalb der Steuerelektronik 24 ist die Aufgabevorrichtung 21 angeordnet. Bei dem gezeigten Ausführungsbeispiel umfasst diese eine vertikal verfahrbare Sperre 21a, welche u.a. dazu dient, Arzneimittelpackungen mit einer definierten Ausrichtung auf ein (nicht gezeigtes) Fördermittel zu legen. Bei dem gezeigten Ausführungsbeispiel umfasst die Aufgabevorrichtung 21 keine Fördervorrichtung für die Arzneimittelpackungen. Diese wird, wie insbesondere in Figur 2 beschrieben, von dem Gehäuse der Kommissioniervorrichtung bereitgestellt, bei dessen Gehäuse-Ankoppelschnittstelle ein Abschnitt der Fördervorrichtung aus dem Gehäuse hinausragt und bei der Montage der Kommissioniervorrichtung in die Aufgabevorrichtung eingeführt wird, womit der aus dem Gehäuse ragende Abschnitt der Fördervorrichtung ein Teil der Aufgabevorrichtung 21 wird. Oberhalb der Aufgabevorrichtung 21 ist ein Bereich für Bediener-Eingabe/Ausgabe-Einrichtungen 23 vorgegeben, wobei bei dem gezeigten Ausführungsbeispiel diese der Übersicht halber nicht dargestellt sind. Im oberen Bereich des Versorgungs- und Steuermoduls 20 ist in diesem Ausführungsbeispiel noch eine unterbrechungsfreie Stromversorgung 28 in doppelter Ausführung angeordnet. Schließlich sind im Deckenabschnitt des Versorgungs- und Steuermoduls 20 Luftaustritte 31 angeordnet.

## Patentansprüche

1. Apothekenkommissioniervorrichtung (1), aufweisend
ein Gehäuse (10) mit
einer Mehrzahl von übereinander angeordneten Regalböden (11),
zumindest einem horizontal und vertikal vor den Regalböden (11) auf einer Führung (16) verfahrbaren Bediengerät (12) mit einer Greifvorrichtung (13) zum Ein- und/oder Auslagern von Arzneimittelpackungen (40) auf bzw. von den Regalböden (11), wobei das Bediengerät (12) auf in einem Arbeitsbereich befindliche Arzneimittelpackungen zugreifen kann,
einer Fördervorrichtung (14) zum Transportieren einzulagernder Arzneimittelpackungen, wobei sich die Fördervorrichtung (14) zumindest teilweise in den Arbeitsbereich des Bediengeräts (12) erstreckt, und
einer Gehäuse-Ankoppelschnittstelle (15), die an einer Außenwand oder innerhalb einer Ausnehmung des Gehäuses (10) angeordnet ist und an welche die Fördervorrichtung (14) bei einer vorgegebenen Position angrenzt, und
einem universellen Versorgungs- und Steuermodul (20) mit folgenden Baugruppen:
einer Aufgabevorrichtung (21) für einzulagernde Arzneimittelpackungen,
einer Identifizierungs- und Messvorrichtung (22) zum Identifizieren und Vermessen einzulagernder Arzneimittelpackungen,
Bediener-Eingabe/Ausgabe-Einrichtungen (23) zur Eingabe und Wiedergabe von Daten und Anweisungen durch bzw. an einen Bediener,
einer Steuerelektronik (24), die die in dem Versorgungs- und Steuermodul angeordneten Baugruppen steuert,
einer Spannungsversorgungbaugruppe (25) für sämtliche elektrische Baugruppen des Versorgungs- und Steuermoduls,
einer zu der Gehäuse-Ankoppelschnittstelle (15) komplementären mechanischen Modul-Ankoppelschnittstelle (26), und
wenigstens einer elektrischen Schnittstelle (27) zum Ankoppeln sämtlicher innerhalb des Gehäuses (10) angeordneter elektrischer Baugruppen derart, dass deren Spannungsversorgung von der Spannungsversorgungsbaugruppe (25) des Versorgungs- und Steuermoduls (20) bereitgestellt wird,
wobei die wenigstens eine elektrische Schnittstelle (27) eine Schnittstelle für das Bediengerät (X) umfasst, mit der die Steuerelektronik (24) derart gekoppelt ist, dassdie Steuerelektronik Steuersignale an das Bediengerät (12) übermitteln kann, und
wobei das Versorgungs- und Steuermodul (20) derart benachbart zu dem Gehäuse (10) angeordnet ist, das über die Gehäuse-Ankoppelschnittstelle (15) und die Modul-Ankoppelschnittstelle (26) eine mechanische Kopplung zwischen dem Gehäuse und dem Versorgungs- und Steuermodul hergestellt ist, so dass einzulagernde Arzneimittelpackungen in oder am Versorgungs- und Steuermodul (20) an einer der Steuerelektronik bekannten Position auf die Fördervorrichtung (14) übergeben werden.

2. Apothekenkommissioniervorrichtung nach Anspruch 1, **dadurch gekennzeichnet, dass** das Gehäuse (10) eine Ausnehmung aufweist, in welcher das universelle Versorgungs- und Steuermodul (20) angeordnet ist, wobei die Vorderseite des universellen Versorgungs- und Steuermoduls (20) vorzugsweise mit der Vorderfront des Gehäuses (10) abschließt.

3. Apothekenkommissioniervorrichtung nach Anspruch 1 oder 2, **dadurch gekennzeichnet, dass** die Mehrzahl von übereinander angeordneten Regalböden (11) zwei Regalreihen bilden, zwischen denen eine Gasse definiert ist, in welcher die Führung (16) des Bediengeräts (12) derart angeordnet ist, dass das Bediengerät (12) mit der Greifvorrichtung (13) auf Regalböden der Regalreihen zugreifen kann.

4. Apothekenkommissioniervorrichtung nach Anspruch 2 oder 3, **dadurch gekennzeichnet, dass** die Antriebseinheit für die Bewegung des Bediengeräts (12) entlang der Führung in dem universellen Versorgungs- und Steuermoduls (20) angeordnet ist.

5. Apothekenkommissioniervorrichtung nach einem der Ansprüche 1 - 4, **dadurch gekennzeichnet, dass** die Antriebseinheit der Fördervorrichtung (14) in dem universellen Versorgungs- und Steuermoduls (20) angeordnet ist.

6. Apothekenkommissioniervorrichtung nach einem der Ansprüche 1 - 5, **dadurch gekennzeichnet, dass** ein Abschnitt der Fördervorrichtung (14) bei der Gehäuse-Ankoppelschnittstelle (15) aus dem Gehäuse geführt ist und über die Modul-Ankoppelschnittstelle (26) in das universelle Versorgungs- und Steuermodul (20) hineinragt.

7. Apothekenkommissioniervorrichtung nach einem der Ansprüche 1 - 6, **dadurch gekennzeichnet, dass** die Fördervorrichtung (14) ein Endlosförderband (14a) umfasst.

8. Apothekenkommissioniervorrichtung nach einem der Ansprüche 1 - 7, **dadurch gekennzeichnet, dass** das universelle Versorgungs- und Steuermodul (20) ferner eine Belüftungsvorrichtung mit einer Luftansaugeinrichtung (30), Luftführungen und Luftaustritten (31) aufweist, wobei die Luftführungen vorzugsweise derart ausgebildet sind, dass keine Luft in das Gehäuse eintritt.

## Claims

1. A pharmacy picking device (1), comprising a housing (10) with
a plurality of shelves (11) arranged one above the other,
at least one operating device (12) horizontally and vertically movable in front of the shelves (11) on a guide (16) with a pick-up means (13) for storing and/or retrieving medicine packages (40) on or from the shelves (11), wherein the operating device (12) can access medicine packages present in a working area,
a conveying device (14) for transporting medicine packages to be stored, wherein the conveying device (14) extends at least partially into the working area of the operating device (12), and
a housing-coupling interface (15) which is arranged on an external wall or within a recess of the housing (10), and which is adjoined by the conveying device (14) at a predefined position, and
a universal supply and control module (20) with the following assemblies:
a feed device (21) for medicine packages to be stored,
an identification and measuring device (22) for identifying and measuring medicine packages to be stored,
operator input/output units (23) for the input and playback of data and instructions by/to an operator,
control electronics (24) which controls the assemblies arranged inside the supply and control module,
a voltage supply assembly (25) for all electric assemblies of the supply and control module,
a mechanical module-coupling interface (26) complementary to the housing-coupling interface (15), and
at least one electric interface (27) for coupling all electric assemblies arranged inside the housing (10) such that its voltage supply is provided by the voltage supply assembly (25) of the supply and control module (20),
wherein the at least one electric interface (27) comprises an interface for the operating device (X) with which the control electronics (24) is coupled in such a way that the control electronics can communicate control signals to the operating device (12), and
wherein the supply and control module (20) is arranged adjacent to the housing (10) in such a way that a mechanical coupling is established between the housing and the supply and control module via the housing-coupling interface (15) and the module-coupling interface (26), so that medicine packages to be stored are transferred in or on the supply and control module (20) at a position on the conveying device (14) which is known to the control electronics.

2. The pharmacy picking device according to claim 1, **characterised in that** the housing (10) comprises a recess in which the universal supply and control module (20) is arranged, wherein the front of the universal supply and control module (20) ends preferably flush with the front side of the housing (10).

3. The pharmacy picking device according to claims 1 or 2, **characterised in that** the plurality of shelves (11) arranged one above the other form two rows of shelves, between which a lane is defined in which the guide (16) of the operating device (12) is arranged in such a way that the operating device (12) can access shelves of the row of shelves with the pick-up means (13).

4. The pharmacy picking device according to claims 2 or 3, **characterised in that** the drive unit for moving the operating device (12) is arranged along the guide in the universal supply and control module (20).

5. The pharmacy picking device according to one of claims 1 to 4, **characterised in that** the drive unit of the conveying device (14) is arranged in the universal supply and control module (20).

6. The pharmacy picking device according to one of claims 1 to 5, **characterised in that** a section of the conveying device (14) protrudes from the housing at the housing-coupling interface (15) and via the module-coupling interface (26) protrudes into the universal supply and control module (20).

7. The pharmacy picking device according to one of claims 1 to 6, **characterised in that** the conveying device (14) comprises an endless conveyor belt (14a).

8. The pharmacy picking device according to one of claims 1 to 7, **characterised in that** the universal supply and control module (20) further comprises a ventilating device with an air intake unit (30), air ducts and air exits (31), wherein the air ducts are preferably configured in such a way that air cannot enter into the housing.

## Revendications

1. Dispositif de préparation des commandes en pharmacie (1), comportant un boîtier (10) avec
une pluralité de fonds d'étagères (11) placés les uns au-dessus des autres,
au moins un appareil de manipulation (12) déplaçable sur un guidage (16) à l'horizontale et à la verticale à l'avant des fonds d'étagères (11), avec un dispositif de préhension (13) pour la mise en stock ou la sortie de stock de boîtes de médicaments (40) sur ou à partir des fonds d'étagères (11), l'appareil de manipulation (12) étant en mesure d'accéder à des boîtes de médicaments se trouvant dans une zone de travail,
un dispositif de manutention (14) pour transporter des boîtes de médicaments devant être mises en stock, le dispositif de manutention (14) s'étendant au moins en partie dans la zone de travail de l'appareil de manipulation (12) et
une interface d'accouplement (15) de boîtier qui est placée sur une paroi extérieure ou à l'intérieur d'un évidement du boîtier (10) et à laquelle le dispositif de manutention (14) est adjacent dans une position prédéfinie et
un module d'alimentation et de commande (20) universel avec les ensembles suivants :
un dispositif de dépose (21) pour les boîtes de médicaments devant être mises en stock,
un dispositif d'identification et de mesure (22) pour identifier et mesurer des boîtes de médicaments devant être mises en stock,
des systèmes de saisie/d'édition (23) pour l'opérateur, pour saisir et reproduire des données et des instructions par l'opérateur ou à son attention,
une électronique de commande (24) qui commande les ensembles placés dans le module d'alimentation et de commande,
un ensemble d'alimentation en tension (25) pour tous les ensembles du module d'alimentation et de commande,
une interface mécanique d'accouplement (26) de module qui est complémentaire de l'interface d'accouplement (15) de boîtier,
au moins une interface électrique (27) pour accoupler tous les ensembles électriques se trouvant à l'intérieur du boîtier (10), de telle sorte que leur alimentation en tension soit mise à disposition par l'ensemble d'alimentation en tension (25) du module d'alimentation et de commande (20),
l'au moins une interface électrique (27) comprenant une interface pour l'appareil de manipulation (X), à l'aide de laquelle l'électronique de commande (24) est accouplée de telle sorte que l'électronique de commande puisse transmettre des signaux de commande à l'appareil de manipulation (12) et
le module d'alimentation et de commande (20) étant placé au voisinage du boîtier (10), de telle sorte que par l'intermédiaire de l'interface d'accouplement (15) de boîtier et de l'interface d'accouplement (26) de module, il soit établi un couplage mécanique entre le boîtier et le module d'alimentation et de commande, de manière à ce qu'à une position connue par l'électronique de commande, des boîtes de médicaments devant être mises en stock soient transmises dans ou sur le module d'alimentation et de commande (20) au dispositif de manutention (14).

2. Dispositif de préparation des commandes en pharmacie selon la revendication 1, **caractérisé en ce que** le boîtier (10) comporte un évidement dans lequel est placé le module (20) universel d'alimentation et de commande, la face avant du module (20) universel d'alimentation et de commande se terminant de préférence sur le front antérieur du boîtier (10).

3. Dispositif de préparation des commandes en pharmacie selon la revendication 1 ou la revendication 2, **caractérisé en ce que** la pluralité de fonds d'étagères (11) placés les uns au-dessus des autres forment deux rangées d'étagères entre lesquelles est définie une voie dans laquelle le guidage (16) de l'appareil de manipulation (12) est placé de telle sorte que l'appareil de manipulation (12) puisse accéder via le dispositif de préhension (13) à des fonds d'étagères de la rangée d'étagères.

4. Dispositif de préparation des commandes en pharmacie selon la revendication 2 ou la revendication 3, **caractérisé en ce que** l'unité d'entraînement pour le déplacement de l'appareil de manipulation (12) est placée le long du guidage dans le module (20) universel d'alimentation et de commande.

5. Dispositif de préparation des commandes en pharmacie selon l'une quelconque des revendications 1 à 4, **caractérisé en ce que** l'unité d'entraînement du dispositif de manutention (14) est placée dans le module (20) universel d'alimentation et de commande.

6. Dispositif de préparation des commandes en pharmacie selon l'une quelconque des revendications 1 à 5, **caractérisé en ce qu'**une partie du dispositif de manutention (14) est guidée hors du boîtier au niveau de l'interface d'accouplement (15) de boîtier et saillit dans le module (20) universel d'alimentation et de commande, par l'intermédiaire de l'interface d' accouplement (26) de module.

7. Dispositif de préparation des commandes en pharmacie selon l'une quelconque des revendications 1 à 6, **caractérisé en ce que** le dispositif de manutention (14) comprend une bande de transport (14a) sans fin.

8. Dispositif de préparation des commandes en pharmacie selon l'une quelconque des revendications 1 à 7, **caractérisé en ce que** le module (20) universel d'alimentation et de commande comporte par ailleurs un dispositif de ventilation avec un système d'aspiration (30) d'air, des guidages d'air et des sorties d'air (31), les guidages d'air étant conçue de préférence de sorte qu'aucun air ne s'introduise dans le boîtier.
